# EUROPÄISCHE PATENTSCHRIFT

(11) **EP 2 352 970 B1**
(45) Veröffentlichungstag und Bekanntmachung des Hinweises auf die Patenterteilung: **10.10.2012**
(21) Anmeldenummer: 09737371.6
(22) Anmeldetag: 20.10.2009
(51) Int. Cl.: G01C 21/36

(54) **KRAFTFAHRZEUGBEDIENSYSTEM**
MOTOR VEHICLE OPERATOR CONTROL SYSTEM
SYSTÈME DE MAN UVRE D'UN VÉHICULE AUTOMOBILE

(30) Priorität: 13.11.2008 DE 102008056974
(43) Veröffentlichungstag der Anmeldung: 10.08.2011
(73) Patentinhaber: Bayerische Motoren Werke Aktiengesellschaft, 80809 München (DE)
(72) Erfinder: KNOLL, Christian, 80538 München (DE); ZOBL, Martin, 86916 Kaufering (DE); SCHUMANN, Josef, 80995 München (DE); ECKSTEIN, Lutz, 82319 Starnberg (DE)
(86) Internationale Anmeldenummer: PCT/EP2009/007493
(87) Internationale Veröffentlichungsnummer: WO 2010/054736

(56) Entgegenhaltungen:
- EP-A1- 0 893 750
- JP-A- 2009 205 302
- US-A- 5 757 268
- US-A1- 2002 154 150
- US-A1- 2006 022 521
- US-A1- 2006 112 350
- US-A1- 2006 155 431
- US-B1- 6 275 231
- US-B1- 6 647 338
- Anna E. Pohlmeyer, Marcel Botha: "A Dynamic Content Visualization Framework to Optimize Driver Information Processing" 31. Juli 2007 (2007-07-31), XP002563246 Gefunden im Internet: URL:http://stuff.mit.edu/afs/athena.mit.ed u/dept/agelab/news_events/pdfs/Create_2007 _Pohlmeyer_DCVF.pdf> [gefunden am 2010-01-14]

## Beschreibung

Die Erfindung betrifft ein Kraftfahrzeugbediensystem.

Aktuelle Kraftfahrzeuge verfügen zunehmend über eine separat von einer Anzeigeeinrichtung gebildete Bedieneinheit im Bereich der Mittelkonsole. Eine solche Bedieneinheit ist beispielsweise aus der EP 0893750 B1 bekannt. Die Bedieneinheit verfügt dabei über ein bidirektional um seine Symmetrieachse drehbares Schaltglied, das zudem axial bewegbar (drückbar) und schwenkbar gelagert ist. Damit können durch ein Drehen, Drücken und/oder Schwenken des Schaltgliedes beispielsweise Menüpunkte auf einer Anzeigeeinrichtung markiert und ausgewählt werden oder Parameter eingestellt werden.

Ebenfalls ist es bekannt, den Zoom-Faktor, insbesondere den Darstellungsmaßstab, einer Straßenkartendarstellung eines Kraftfahrzeugnavigationssystems durch ein Drehen einer solchen Bedieneinheit einzustellen. Der Begriff "Zoom" umfasst im Rahmen der Erfindung auch den Begriff "Darstellungsmaßstabsänderung".

Außerdem sind Überwachungssysteme, wie beispielsweise Check-Control-Systeme, bekannt, welche beispielsweise auf verschiedenen Sensoren und einem zentralen Steuergerät basieren. Mittels solcher Überwachungssysteme kann beispielsweise das Umfeld des Fahrzeuges oder der Zustand des Fahrzeuges, insbesondere von Betriebsstoffen und Verschleißteilen des Fahrzeuges, überwacht werden. Falls ein Fehler oder ein kritischer Zustand erkannt wird, wird beispielsweise automatisch eine Kontrollleuchte aktiviert oder ein anderes Überwachungssignal ausgegeben. Es sind auch Überwachungssysteme bekannt, die das Umfeld des eigenen Fahrzeugs erfassen und bewerten, um den Fahrer bei seiner Fahraufgabe durch eine geeignete Information, Warnung oder unterstützende Aktion zu assistieren (Fahrerassistenzsystem).

Ergänzend oder alternativ dazu ist beispielsweise aus der US 6275231 B1 bekannt, einem Nutzer die Möglichkeit zu geben, mittels eines Bedienelementes, beispielsweise einer Taste, auf durch das Überwachungssystem bereitgestellte Fahrzeug-Informationen, insbesondere Fahrerassistenzinformationen (und damit Fahrerassistenzfunktionen) und/oder Umgebungsinformationen, zuzugreifen. Ein solcher Zugriff auf Überwachungsinformationen, insbesondere Fahrerassistenzinformationen, Check-Control-Informationen und/oder Umgebungsinformationen, kann auch durch die Auswahl eines Menüpunktes mittels einer oben genannten Bedieneinheit erfolgen.

Insbesondere der manuelle Zugriff auf durch das Überwachungssystem bereitgestellte Fahrzeug-Informationen ist dabei in der Regel kompliziert und nicht intuitiv gestaltet. Darüber hinaus erfolgt bislang der Zugriff verschiedenen Fahrzeuginformationen, wie beispielsweise Informationen des Navigationssystems, Informationen der Fahrerassistenz und Check-Control-Informationen, auf uneinheitliche Weise, insbesondere über unterschiedliche Bedienelemente und Anzeigen.

Der Erfindung liegt nun die Aufgabe zugrunde, ein verbessertes Kraftfahrzeugbediensystem anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert auch auf dem Gedanken, in einer bestimmten Bediensituation durch eine Zoom-Bedienaktion, die in der Regel zur Veränderung eines Zoomfaktors oder Darstellungsmaßstabes verwendet wird, nicht den Zoomfaktor zu ändern, sondern einen Betriebszustand zu ändern, insbesondere eine Anzeigeeinrichtung auf Fahrzeuginformationen umzuschalten. Vorzugsweise kann dann durch eine weitere Zoom-Bedienaktion zwischen unterschiedlichen Fahrzeuginformationen umgeschaltet werden.

Ein bevorzugtes Kraftfahrzeugbediensystem umfasst ein Navigationssystem zum Bereitstellen von Straßenkarten-Informationen, ein Fahrzeug-Überwachungs-System zum Bereitstellen von Fahrzeuginformationen, beispielsweise ein Fahrerassistenzsystem zum Bereitstellen von Informationen über das Fahrzeugumfeld, eine Anzeigeeinrichtung zur alternativen oder ergänzenden Anzeige von Straßenkarteninformationen und Fahrzeuginformationen, eine Bedieneinrichtung zur Erfassung einer Bedienaktion und eine Steuereinrichtung.

Die Steuereinrichtung ist derart eingerichtet und mit dem Navigationssystem, dem Fahrzeug-Überwachungs-System, der Anzeigeeinrichtung und der Bedieneinrichtung gekoppelt, dass in einem Zoombetriebszustand auf der Anzeigeeinrichtung Straßenkarteninformationen dargestellt werden, dass in einem Überwachungsbetriebszustand auf der Anzeigeeinrichtung Fahrzeuginformationen dargestellt werden, dass im Zoombetriebszustand durch zumindest eine vorgegebene Zoom-Bedienaktion der Zoom-Faktor für die Anzeige der Straßenkarteninformationen insbesondere zwischen zwei Grenzwerten (ein Grenzwert kann auch unendlich oder Null sein) einstellbar ist, und dass im Zoombetriebszustand in zumindest einer oder genau einer vorgegebenen Bediensituation oder Zoom-Situation, insbesondere bei der Einstellung des Zoomfaktors auf einen vorgegebenen Grenzwert, durch eine weitere Zoom-Bedienaktion vom Zoombetriebszustand auf den Überwachungsbetriebszustand umgeschaltet wird. Insbesondere wird dabei die Anzeigeeinrichtung von dem Navigationssystem auf das Fahrzeug-Überwachungs-System umgeschaltet und/oder die Anzeigeeinrichtung von der Darstellung der Straßenkarteninformationen auf die Darstellung der Fahrzeuginformationen umgeschaltet. Eine von der Zoom-Bedienaktion verschiedene Bedienaktion ist für das Umschalten zwischen den Betriebszuständen vorzugsweise nicht erforderlich. Die Zoom-Bedienaktionen sind vorzugsweise identisch (beispielsweise Drehung eines Bedienelementes um einen vorgegebenen Drehwinkel) und werden durch dieselbe Bedieneinrichtung erfasst.

Vorzugsweise werden auf der Anzeigeeinrichtung im Überwachungsbetriebszustand keine Straßenkarteninformationen dargestellt. Alternativ oder ergänzend dazu werden im Zoombetriebszustand vorzugsweise Fahrzeuginformationen nicht dargestellt, die im Überwachungsbetriebszustand dargestellt werden, oder es werden im Zoombetriebszustand vorzugsweise Fahrzeuginformationen anders dargestellt als im Überwachungsbetriebszustand. Abbiegepfeile oder Fahrmanöverhinweise zählen vorzugsweise nicht zu den Straßenkarteninformationen.

Es liegt dabei aber auch im Rahmen der Erfindung, dass auf der Anzeigeeinrichtung während des Zoombetriebszustandes auch Fahrzeuginformationen dargestellt werden und/oder im Überwachungsbetriebszustand auch Straßenkarteninformationen dargestellt werden.

Der Zoombetriebszustand unterscheidet sich vorzugsweise dadurch vom Überwachungsbetriebszustand, dass im Zoom-Betriebszustand durch eine Zoom-Bedienaktion der Zoomfaktor der Darstellung der Straßenkarteninformationen geändert wird, während im Überwachungsbetriebszustand durch eine Zoom-Bedienaktion der Zoomfaktor der Darstellung der Straßenkarten-informationen nicht geändert wird.

Eine Änderung des Zoomfaktors kann mit einer Änderung der Darstellungsart (2D,3D, perspektivisch, etc.) verbunden sein.

Die Anzeigeeinrichtung ist vorzugsweise durch ein Anzeigefenster oder einen Abschnitt einer größeren Anzeigeeinrichtung oder eines Displays gebildet.

Durch die Erfindung wird beispielsweise in einem Zoombetriebszustand durch aufeinanderfolgende identische Bedienaktionen, beispielsweise das Drehen einer Bedieneinrichtung oder eines Bedienelementes der Bedieneinrichtung um einen vorgegebenen Drehwinkel, zunächst nach und nach der Zoom-Faktor einer Straßenkartendarstellung geändert bis hin zu einem maximalen Zoom-Faktor, bei dem die Straßenkarte in maximaler Vergrößerung dargestellt wird. Wird nun bei diesem eingestellten maximalen Zoomfaktor eine weitere identische Bedienaktion durch die Bedieneinrichtung erfasst, so wird anstelle einer weiteren Vergrößerung der Straßenkartendarstellung eine Umschaltung der Anzeige auf Fahrzeuginformationen bewirkt (Überwachungsbetriebszustand), die von einem Fahrzeug-Überwachungs-System ermittelt und bereitgestellt werden. Durch eine der genannten Bedienaktion entgegen gerichtete und/oder entgegenwirkende Bedienaktionen, beispielsweise das Drehen der Bedieneinrichtung oder eines Bedienelementes um einen vorgegebenen Drehwinkel in entgegen gesetzte Drehrichtung wird die Anzeige beispielsweise wieder umgeschaltet auf die Straßenkartendarstellung (Zoombetriebszustand). Innerhalb des Überwachungsbetriebszustandes kann beispielsweise durch identische Bedienaktionen zwischen verschiedenen Überwachungsteilbetriebszuständen umgeschaltet werden, in welchen unterschiedliche Fahrzeuginformationen angezeigt werden.

Durch die Erfindung wird ein einfacher, schneller und intuitiver, manuell ausgelöster Zugriff auf von einem Überwachungssystem zur Verfügung gestellte Fahrzeuginformationen ermöglicht. Das Zoom-Prinzip wird dabei erweitert: Es wird zunächst in an sich bekannter Weise durch Zoom-Bedienaktionen der Zoomfaktor vergrößert und damit das Fahrzeug oder die Fahrzeugumgebung immer größer dargestellt. Schließlich erfolgt bei einem maximalen Zoomfaktor und damit bei einer maximal vergrößerten Darstellung des Fahrzeuges oder der Fahrzeugumgebung eine erwartete Umschaltung der Darstellung beispielsweise derart, dass nun nicht mehr das Fahrzeug von außen sondern von innen betrachtet wird bzw. nicht mehr das Fahrzeug bezogen auf die Straßenkarte sondern ein Fahrzeugbereich oder eine Fahrzeugkomponente bezogen auf das Fahrzeug betrachtet wird und entsprechende diese Fahrzeugkomponente betreffende Fahrzeuginformationen angezeigt werden. Dies entspricht der natürlichen und vom Nutzer erwarteten Informationsfolge, insbesondere Bildfolge, die durch eine virtuelle Kamera erzeugt werden würde, welche sich entsprechend der Zoom-Bedienaktionen aus zunächst großer Entfernung dem Fahrzeug nähert. Es wird zuerst die Position des Fahrzeuges relativ zum Straßennetz erfasst und dann beispielsweise im Überwachungsbetriebszustand die nähere Umgebung des Fahrzeuges erfasst. Schließlich dringt die virtuelle Kamera bei Erreichen der Fahrzeugaußenhaut durch diese hindurch, um im Überwachungsbetriebszustand das Innere des Fahrzeuges zu überwachen, um beispielsweise Fahrzeuginformationen, die von Fahrzeug-Überwachungs-Systemen zur Verfügung gestellt werden, anzuzeigen.

Der Überwachungsbetriebszustand ist vorzugsweise in eine Vielzahl von Überwachungsteilbetriebszustände gegliedert, zwischen welchen ebenfalls durch die Zoom-Bedienaktion umgeschaltet wird. Dadurch können durch einfache und intuitive Bedienaktionen verschiedene Fahrzeuginformationen aufgerufen werden. Beispielsweise können folgende Überwachungsteilbetriebszustände vorgesehen sein: ein Fahrsituationsteilbetriebszustand mit Vorausschau (z.B. Darstellung von Guiding Info, Verkehrsinfo, etc.), ein Fahrerassistenzteilbetriebszustand mit Fahrzeugdarstellung und Verkehrsinformationen oder ein "Technikerlebenteilbetriebszustand" (z.B. mit Darstellung von Hybridfunktionen), ein Check-Control-Teilbetriebszustand, etc.

Vorzugsweise kann im Überwachungsbetriebszustand, insbesondere in einem vorgegebenen Überwachungsteilbetriebszustand, durch eine weitere Zoom-Bedienaktion vom Überwachungsbetriebszustand, insbesondere vom vorgegebenen Überwachungsteilbetriebszustand, wieder in den Zoom-Betriebszustand umgeschaltet werden.

Vorzugsweise beziehen sich ein erster Überwachungsteilbetriebszustand (beispielsweise Fahrzeugumfeldüberwachung) auf einen ersten Fahrzeugbereich (Fahrzeugumfeld) und ein zweiter Überwachungsteilbetriebszustand (beispielsweise Motorölstandüberwachung) auf einen zweiten Fahrzeugbereich (Motorraum). Der zweite Fahrzeugbereich liegt näher am Fahrzeugzentrum als der erste Fahrzeugbereich. Ausgehend von dem Zoom-Betriebszustand sind dann vorzugsweise zum Umschalten in den ersten Überwachungsteilbetriebszustand weniger Zoom-Bedienaktionen erforderlich als zum Umschalten in den zweiten Überwachungsteilbetriebszustand.

Eine vorteilhafte Ausgestaltung sieht vor, dass eine Zoom-Bedienaktion eine Drehung der Bedieneinrichtung, insbesondere um einen vorgegebenen Drehwinkel, umfasst. Alternativ dazu kann die Bedieneinrichtung ein Wippelement umfassen.

Durch das Fahrzeug-Überwachungs-System wird vorzugsweise der Verschleißgrad von Fahrzeugkomponenten überwacht, der Füllstand von Betriebsstoffbehältern überwacht, das Fahrzeugumfeld überwacht, der Reifenluftdruck überwacht und/oder Fahrerassistenzinformationen (beispielsweise Systemstatus, Handlungshinweis, Verkehrssituationsinformationen etc.) zur Verfügung gestellt.

Besonders bevorzugt ist vorgesehen, dass im Zoombetriebszustand ein Kraftfahrzeug-Grafikobjekt auf der Anzeigeeinrichtung dargestellt wird, durch welches die Position des Kraftfahrzeuges bezogen auf die Straßenkarteninformationen gekennzeichnet ist.

Vorzugsweise ist auch im Überwachungsbetriebszustand ein Kraftfahrzeug-Grafikobjekt auf der Anzeigeeinrichtung dargestellt, durch welches eine Komponente oder ein Bereich, auf die sich die im Überwachungsbetriebszustand dargestellten Fahrzeuginformationen beziehen, gekennzeichnet ist. Das Kraftfahrzeug-Grafikobjekt wird vorzugsweise bei einem größeren Zoomfaktor automatisch größer dargestellt als bei einem kleineren Zoomfaktor. Das im Überwachungsbetriebszustand dargestellte Kraftfahrzeug-Grafikobjekt ist vorteilhafterweise größer als das im Zoombetriebszustand dargestellte Kraftfahrzeug-Grafikobjekt. Das Kraftfahrzeug-Grafikobjekt kann abgesehen von der Größe, insbesondere hinsichtlich der Umrissgestaltung und/oder Perspektive, in beiden Betriebzuständen identisch oder ähnlich sein.

Im Rahmen der Erfindung liegt auch ein Kraftfahrzeugbediensystem mit einer ersten Informationsquelle zum Bereitstellen erster Informationen, mit einer zweiten Informationsquelle zum Bereitstellen zweiter Informationen, mit einer Anzeigeeinrichtung zur alternativen oder gleichzeitigen Anzeige von ersten und zweiten Informationen, mit einer Bedieneinrichtung zur Erfassung einer Bedienaktion und mit einer Steuereinrichtung, die derart eingerichtet und mit den Informationsquellen, der Anzeigeeinrichtung und der Bedieneinrichtung gekoppelt ist, dass in einem ersten Betriebszustand auf der Anzeigeeinrichtung erste Informationen dargestellt werden, dass in einem zweiten Betriebszustand auf der Anzeigeeinrichtung zweite Informationen dargestellt werden, dass im ersten Betriebszustand durch zumindest eine vorgegebene Zoom-Bedienaktion der Zoom-Faktor für die Anzeige der ersten Informationen insbesondere zwischen zwei Grenzwerten (ein Grenzwert kann auch unendlich oder Null sein) einstellbar ist, und dass im ersten Betriebszustand in zumindest einer vorgegebenen Bediensituation oder Zoom-Situation, insbesondere bei der Einstellung des Zoomfaktors auf einen Grenzwert, durch eine weitere Zoom-Bedienaktion vom ersten Betriebszustand auf den zweiten Betriebszustand umgeschaltet wird. Im zweiten Betriebszustand wird durch weitere Zoom-Bedienaktionen vorzugsweise zwischen Teilbetriebszuständen umgeschaltet. Ein einen Darstellungsmaßstab repräsentierender Zoom-Faktor wird im zweiten Betriebszustand insbesondere hinsichtlich der Anzeige der ersten Informationen durch weitere Zoom-Bedienaktionen nicht umgeschaltet.

Im Folgenden wird die Erfindung anhand von Beispielen unter Bezugnahme auf die folgenden Figuren näher erläutert:
- Figur 1: zeigt ein vereinfachtes Blockschaltbild eines Kraftfahrzeugbediensystems im Zoombetriebszustand bei einem ersten Zoom-Faktor;
- Figur 2: zeigt ein vereinfachtes Blockschaltbild eines Kraftfahrzeugbediensystems im Zoombetriebszustand bei einem zweiten Zoom-Faktor;
- Figur 3: zeigt ein vereinfachtes Blockschaltbild eines Kraftfahrzeugbediensystems in einem ersten Überwachungsteilbetriebszustand;
- Figur 4: zeigt ein vereinfachtes Blockschaltbild eines Kraftfahrzeugbediensystems in einem zweiten Überwachungsteilbetriebszustand.

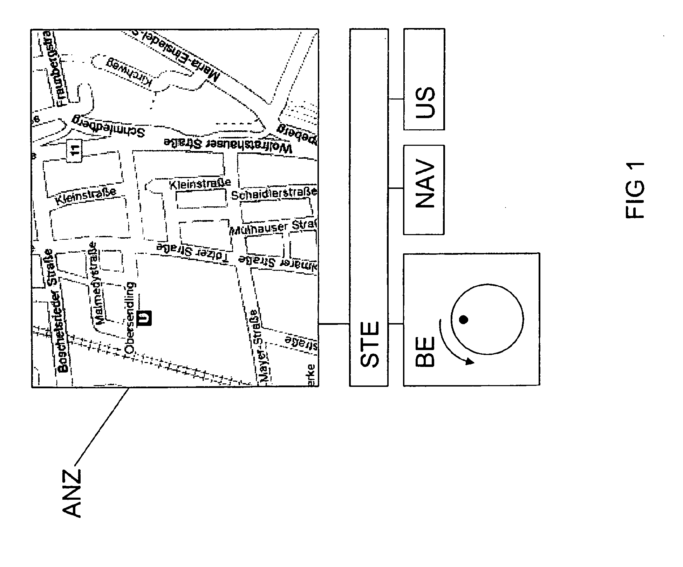

Es wird von einem an sich bekannten Kraftfahrzeugbediensystem ausgegangen, das in Figur 1 dargestellt ist. Es umfasst als Anzeigeeinrichtung ANZ, ein Display oder einen Displayabschnitt, ein Navigationssystem NAV, ein Überwachungssystem US und eine Bedieneinrichtung BE, welche ein Drehelement umfasst. Diese Komponenten sind durch ein oder mehrere Steuergeräte STE miteinander gekoppelt.

Insbesondere die Steuereinrichtung STE ist nun gemäß der Erfindung derart eingerichtet, dass auf der Anzeigeeinrichtung ANZ in einem Zoombetriebszustand Straßenkarteninformationen dargestellt werden, und in einem Überwachungsbetriebszustand Fahrzeuginformationen dargestellt werden.

Im Zoombetriebszustand ist durch zumindest eine vorgegebene Zoom-Bedienaktion der Zoom-Faktor für die Anzeige der Straßenkarteninformationen, insbesondere zwischen zwei Grenzwerten, einstellbar. In zumindest einer vorgegebenen Bediensituation oder Zoom-Situation, insbesondere bei der Einstellung des Zoomfaktors auf einen Grenzwert, wird durch eine weitere Zoom-Bedienaktion vom Zoombetriebszustand auf den Überwachungsbetriebszustand umgeschaltet.

In Figur 1 befindet sich das System im Zoom-Betriebszustand. Der Zoomfaktor ist auf einen ersten Wert eingestellt, gemäß welchem die Darstellung der digitalen Straßenkarte auf der Anzeigeeinrichtung ANZ erfolgt.

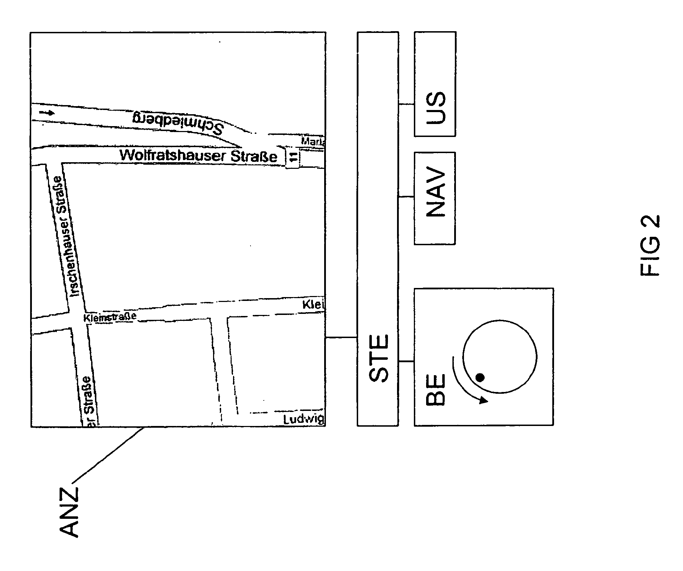

Wird nun das Drehelement BE - wie in Figur 2 ersichtlich - um einen Drehwinkel von 45 Grad entgegen dem Uhrzeigersinn gedreht, so wird der Zoomfaktor auf einen zweiten Wert gestellt, der in diesem Beispiel größer als der erste Wert und zudem gleich dem maximalen Grenzwert für den Zoomfaktor ist. Die Vergrößerung der Darstellung der digitalen Straßenkarte auf der Anzeigeeinrichtung ANZ erfolgt nun gemäß dem maximalen Grenzwert für den Zoomfaktor.

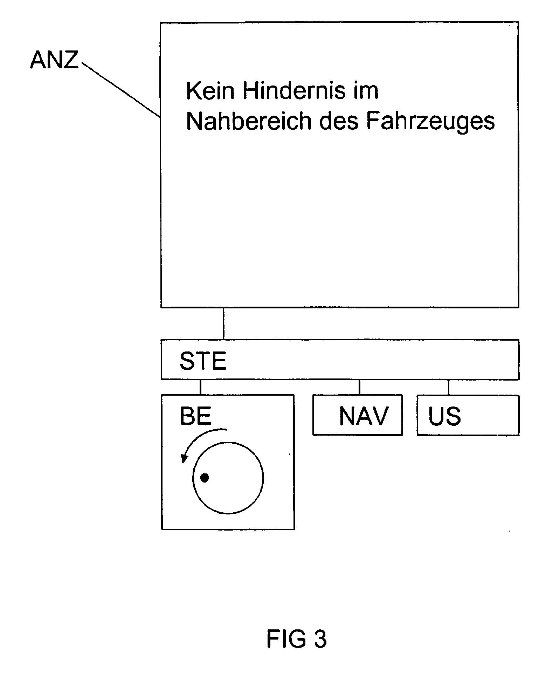

Wird nun in dieser besonderen Bediensituation das Drehelement BE - wie in Figur 3 ersichtlich - erneut um einen Drehwinkel von 45 Grad entgegen dem Uhrzeigersinn gedreht, so wird automatisch von dem Zoom-Betriebszustand in einen Überwachungsbetriebszustand, insbesondere einen ersten Überwachungsteilbetriebszustand, umgeschaltet, in dem Fahrzeuginformationen, welche das Fahrzeugumfeld beschreiben oder repräsentieren, angezeigt werden. Das Fahrzeugumfeld wird beispielsweise durch ein an sich bekanntes Nahfelderfassungssystem oder eine Einparkhilfe (PDC) überwacht.

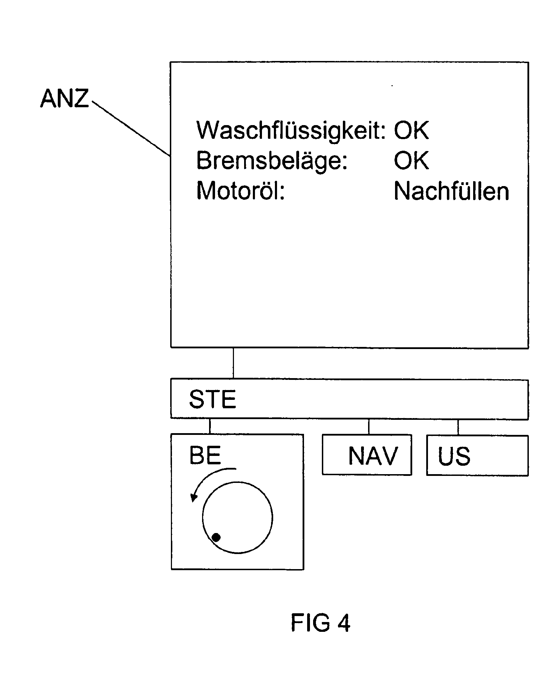

Wird nun das Drehelement BE - wie in Figur 4 ersichtlich - erneut um einen Drehwinkel von 45 Grad entgegen dem Uhrzeigersinn gedreht, so wird automatisch von dem ersten Überwachungsteilbetriebszustand in einen zweiten Überwachungsteilbetriebszustand umgeschaltet, in dem Fahrzeuginformationen, welche Betriebsmittelfüllstände des Fahrzeuges beschreiben oder repräsentieren, angezeigt werden.

Ausgehend von dem anhand von Figur 4 beschriebenen Betriebszustand kann durch aufeinander folgende Drehungen des Drehelementes BE um 45 Grad im Uhrzeigersinn nach und nach wieder in den Betriebszustand gemäß Figur 3, den Betriebszustand gemäß Figur 2 und den Betriebszustand gemäß Figur 1 umgeschaltet werden.

## Patentansprüche

1. Kraftfahrzeugbediensystem
- mit einem Navigationssystem zum Bereitstellen von Straßenkarten-Informationen,
- mit einem Fahrzeug-Überwachungs-System zum Bereitstellen von Fahrzeuginformationen,
- mit einer Anzeigeeinrichtung zur Anzeige von Straßenkarteninformationen und Fahrzeuginformationen,
- mit einer Bedieneinrichtung zur Erfassung einer Bedienaktion und
- mit einer Steuereinrichtung, die derart eingerichtet und mit dem Navigationssystem, dem Fahrzeug-Überwachungs-System, der Anzeigeeinrichtung und der Bedieneinrichtung gekoppelt ist,
- dass in einem Zoombetriebszustand auf der Anzeigeeinrichtung Straßenkarteninformationen dargestellt werden,
- dass in einem Überwachungsbetriebszustand auf der Anzeigeeinrichtung Fahrzeuginformationen dargestellt werden,
- dass im Zoombetriebszustand durch zumindest eine vorgegebene Zoom-Bedienaktionen der Zoom-Faktor für die Anzeige der Straßenkarteninformationen zwischen zwei Grenzwerten einstellbar ist, und **dadurch gekennzeichnet**
- **dass** im Zoombetriebszustand in zumindest einer vorgegebenen Bediensituation oder Zoom-Situation, insbesondere bei der Einstellung des Zoomfaktors auf einen Grenzwert, durch eine weitere Zoom-Bedienaktion vom Zoombetriebszustand auf den Überwachungsbetriebszustand umgeschaltet wird.

2. Kraftfahrzeugbediensystem nach Anspruch 1,
bei dem der Überwachungsbetriebszustand in eine Vielzahl von Überwachungsteilbetriebszustände gegliedert ist, zwischen welchen durch jeweils zumindest eine Zoom-Bedienaktion umgeschaltet wird.

3. Kraftfahrzeugbediensystem nach einem der vorhergehenden Ansprüche,
bei dem eine Zoom-Bedienaktion eine Drehung der Bedieneinrichtung, insbesondere um einen vorgegebenen Drehwinkel, umfasst.

4. Kraftfahrzeugbediensystem nach einem der vorhergehenden Ansprüche,
bei dem durch das Fahrzeug-Überwachungs-System der Verschleißgrad von Fahrzeugkomponenten überwacht wird, der Füllstand von Betriebsstoffbehältern überwacht wird, das Fahrzeugumfeld überwacht wird und/oder der Reifenluftdruck überwacht wird.

5. Kraftfahrzeugbediensystem nach einem der vorhergehenden Ansprüche,
bei dem im Zoombetriebszustand ein Kraftfahrzeug-Grafikobjekt auf der Anzeigeeinrichtung dargestellt wird, durch welches die Position des Kraftfahrzeuges bezogen auf die Straßenkarteninformationen gekennzeichnet ist.

6. Kraftfahrzeugbediensystem nach einem der vorhergehenden Ansprüche,
bei dem im Überwachungsbetriebszustand ein Kraftfahrzeug-Grafikobjekt auf der Anzeigeeinrichtung dargestellt wird, durch welches eine Komponente oder ein Bereich, auf die sich die im Überwachungsbetriebszustand dargestellten Fahrzeuginformationen beziehen, gekennzeichnet ist.

7. Kraftfahrzeugbediensystem nach einem der vorhergehenden Ansprüche,
bei dem das Kraftfahrzeug-Grafikobjekt mit größerem Zoomfaktor automatisch größer dargestellt wird.

8. Kraftfahrzeugbediensystem nach einem der vorhergehenden Ansprüche,
bei dem das im Überwachungsbetriebszustand dargestellte Kraftfahrzeug-Grafikobjekt größer ist als das im Zoombetriebszustand dargestellte Kraftfahrzeug-Grafikobjekt.

## Claims

1. A motor vehicle operating system
- with a navigation system for providing road map information,
- with a vehicle monitoring system for providing vehicle information,
- with a display device for displaying road map information and vehicle information,
- with an operating device for detecting an operating action and
- with a control device, which is set up in such a way and coupled to the navigation system, the vehicle monitoring system, the display device and the operating device
- that road map information is shown on the display device in a zoom operating state.
- that vehicle information is shown on the display device in a monitoring operating state.
- that in the zoom operating state, the zoom factor can be adjusted for the display of road map Information between two limit values by at least one predetermined zoom operating action, and **characterised in that**
- in the zoom operating state in at least one predetermined operating situation or zoom situation, more especially during the adjustment of the zoom factor to a limit value, a switch over is made from the zoom operating state to the monitoring operating state by a further zoom operating action.

2. A motor vehicle operating system according to claim 1, wherein the monitoring operating state is divided into a large number of monitoring part operating states, between which a switch is made by at least one respective zoom operating action.

3. A motor vehicle operating system according to any one of the preceding claims, wherein a zoom operating action comprises a rotation of the operating device, more especially about a predetermined angle of rotation.

4. A motor vehicle operating system according to any one of the preceding claims, wherein, by means of the vehicle monitoring system, the degree of wear of vehicle components is monitored, the filling level of fuel containers is monitored, the vehicle surroundings are monitored and/or the tyre inflation pressure is monitored.

5. A motor vehicle operating system according to any one of the preceding claims, wherein, in the zoom operating state, a graphic motor vehicle object is shown on the display device, by means of which graphic object the position of the motor vehicle in relation to the road map information is indicated.

6. A motor vehicle operating system according to any one of the preceding claims, wherein, in the monitoring operating state, a graphic motor vehicle object is shown on the display device, by means of which graphic object a component or a region, to which the vehicle information shown in the monitoring operating state relates, is identified.

7. A motor vehicle operating system according to any one of the preceding claims, wherein the graphic motor vehicle object is automatically shown larger at a larger zoom factor.

8. A motor vehicle operating system according to any one of the preceding claims, wherein the graphic motor vehicle object shown in the monitoring operating state is larger than the graphic motor vehicle object shown in the zoom operating state.

## Revendications

1. Système de gestion de véhicule automobile comprenant :
- un système de navigation fournissant des informations de cartographie routière,
- un système de surveillance du véhicule fournissant des informations relatives au véhicule,
- une installation d'affichage pour afficher des informations de cartographie routière et des informations du véhicule,
- une installation de manoeuvre pour saisir une action de manoeuvre, et
- une installation de commande conçue et couplée avec le système de navigation, le système de surveillance du véhicule, l'installation d'affichage et l'installation de manoeuvre,
- l'installation d'affichage en mode zoom représente les informations de cartographie routière,
- dans un état de fonctionnement de surveillance, l'installation d'affichage représente les informations du véhicule,
- en mode zoom par au moins une action de zoom, on règle le coefficient de zoom pour l'affichage des informations de cartographie routière entre deux valeurs limites,
système **caractérisé en ce qu'**
en mode zoom, dans au moins une situation de manoeuvré prédéterminée ou une situation de zoom, notamment en réglant le coefficient de zoom sur une valeur limite, par une autre action de zoom, on commute du mode zoom au mode de surveillance.

2. Système de gestion de véhicule automobile selon la revendication 1,
selon lequel le mode de fonctionnement de surveillance est décomposé en un ensemble d'états partiels de fonctionnement de surveillance entre lesquels on commute chaque fois par au moins une action de zoom.

3. Système de gestion de véhicule automobile selon l'une des revendications précédentes,
selon lequel une action de zoom comprend une rotation de l'installation de service, notamment selon un angle de rotation prédéfini.

4. Système de gestion de véhicule automobile selon l'une des revendications précédentes,
selon lequel le système de surveillance du véhicule surveille le degré de fermeture des composants du véhicule, le niveau du réservoir de carburant, le champ autour du véhicule et/ou la pression des pneumatiques.

5. Système de gestion de véhicule automobile selon l'une des revendications précédentes,
selon lequel en mode zoom, l'installation d'affichage représente un objet graphique de véhicule qui caractérise la position du véhicule automobile par rapport aux informations de cartographie routière.

6. Système de gestion de véhicule automobile selon l'une des revendications précédentes,
selon lequel dans le mode de fonctionnement de surveillance, l'installation d'affichage représente un objet graphique du véhicule qui caractérise un composant ou une plage concernée par les informations du véhicule représentées dans l'état de fonctionnement de surveillance.

7. Système de gestion de véhicule automobile selon l'une des revendications précédentes,
selon lequel on représente l'objet graphique du véhicule automatiquement avec un coefficient de zoom plus grand.

8. Système de gestion de véhicule automobile selon l'une des revendications précédentes,
selon lequel dans l'état de fonctionnement de surveillance, l'objet graphique du véhicule tel que représente est un objet graphique de véhicule représente dans le mode zoom.
